# EUROPÄISCHE PATENTSCHRIFT

(11) **EP 1 493 006 B1**
(45) Veröffentlichungstag und Bekanntmachung des Hinweises auf die Patenterteilung: **19.06.2013**
(21) Anmeldenummer: 03729827.0
(22) Anmeldetag: 10.04.2003
(51) Int. Cl.: G01L 5/00, G01M 13/04

(54) **Wälzlager mit Sensoren**
Roller bearing equipped with sensors
Palier à roulement muni de capteurs

(30) Priorität: 11.04.2002 DE 10215929
(43) Veröffentlichungstag der Anmeldung: 05.01.2005
(73) Patentinhaber: Schaeffler Technologies AG & Co. KG, 91074 Herzogenaurach (DE)
(72) Erfinder: HEIM, Jens, 97424 Schweinfurt (DE)
(74) Vertreter: Meyer, Rudolf
(86) Internationale Anmeldenummer: PCT/DE2003/001175
(87) Internationale Veröffentlichungsnummer: WO 2003/087745

(56) Entgegenhaltungen:
- US-A- 5 952 587

## Beschreibung

### Gebiet der Erfindung

Die Erfindung betrifft Wälzlager mit Sensoren, die in den verschiedensten Anwendungen eingesetzt werden, um die auf Wälzlager wirkende Kraft und die Temperatur zu messen

### Hintergrund der Erfindung

Wälzlager mit Sensoren haben die Aufgabe, die Betriebsbedingungen, die am Wälzlager vorliegen, zu messen, um mit diesen Messdaten dann den gesamten Prozess der Maschinenanordnung steuern bzw. regeln zu können. Wälzlager mit Sensoren werden hierbei zur Kraftmessung, Drehrichtungsmessung, Drehgeschwindigkeitsmessung und Temperaturmessung eingesetzt. Solche Wälzlager mit Sensoren sind u. a. auch aus der US 5,952, 587 bekannt. Der Einsatz z. B. von DMS-Sensoren sowie die Auswertung dieser Messergebnisse sind in der Schrift ausführlich beschrieben. Das Problem dieser Schrift besteht darin, dass für Wälzlager mit unterschiedlicher Anzahl von Wälzkörpern unterschiedlich viele Kabel vom Wälzlager zur aussenliegenden Auswerteeinheit geführt werden müssen. Das Problem besteht also darin, dass die Auswerteeinheit in Abhängigkeit von den aktuell im Wälzlager benutzten Wälzkörpern, unterschiedlich ausgelegt werden muss.

Aus US 4,667,521 ist ein Sensorsystem bekannt, welches durch eine besondere Sensoranordnung die Signalstärke insbesondere bei geringen Geschwindigkeiten misst.

Aus US 4,118,933 ist ein Sensorsystem bekannt, welches zur Lasterkennung DMS verwendet und deren Signale zur Analyse statischer Wälzlagereigenschaften verwendet werden und Rückschlüsse auf Justagefehler zulassen.

### Aufgabe der Erfindung

Es besteht also die Aufgabe eine Auswerteeinheit von Wälzlagern mit Sensoren vorzuschlagen, die unabhängig von der Anzahl der Wälzkörper im Wälzlager eingesetzt werden kann, die Betriebsbedingungen, die am Wälzlager vorlieben, zu messen, um mit diesen Messdaten dann den gesamten Prozess der Maschinenanordnung steuern bzw. regeln zu können.

### Beschreibung der Erfindung

Die Lösung dieser Aufgabe wird durch die Merkmale im kennzeichnenden Teil des Anspruchs 1 erreicht.

Vorteile werden dadurch erreicht, dass das Wälzlager z. B. in drei 120 Grad umfassende Bereiche unterteilt wird. Alle Sensoren die in einem 120 Grad Bereich liegen, werden mittels eines auf dem Wälzlager angeordneten ASIC ausgewertet, so dass sich für diesen Bereich ein Kraftvektor ergibt.

Ein Bereichs-ASIC führt hierbei eine Vektoraddition der einzelnen Vektoren, die von den Sensoren ermittelt werden, durch, um einen Gesamtvektor zu bilden.

An der Schnittstelle zwischen dem Wälzlager und der Auswerteeinheit stehen also permanent die Kraftvektoren der drei Bereichs-ASICs an. Jeder der drei ASICs übergibt also eine Information, die den Betrag der Kraft sowie die Richtung der Kraft in dem jeweiligen Bereich enthält. In der Auswerteeinheit werden dann diese drei Bereichs-Vektoren vektoriell addiert und ein Vektor, der der Gesamtbelastung des Wälzlagers entspricht, wird somit ermittelt.

Vorteilhafterweise wird eine normierte Schnittstelle zwischen Wälzlager und Auswerteeinheit eingeführt wird. Diese normierte Schnittstelle erlaubt es, unabhängig von der Anzahl der Wälzkörper im Wälzlager immer die gleichen Informationen an der Schnittstelle zur Verfügung zu stellen.

Vorteilhafterweise wird das Wälzlager in 4 Bereiche a 90 Grad eingeteilt. Der Unterschied gegenüber der obigen Ausführungsform besteht darin, dass hier 4 Bereichs- ASICs eingesetzt werden, die den Vektor ermitteln, der der Gesamtbelastung des Wälzlagers entspricht.

Ansonsten entspricht die weitere Vorgehensweise der obigen Ausführungsform.

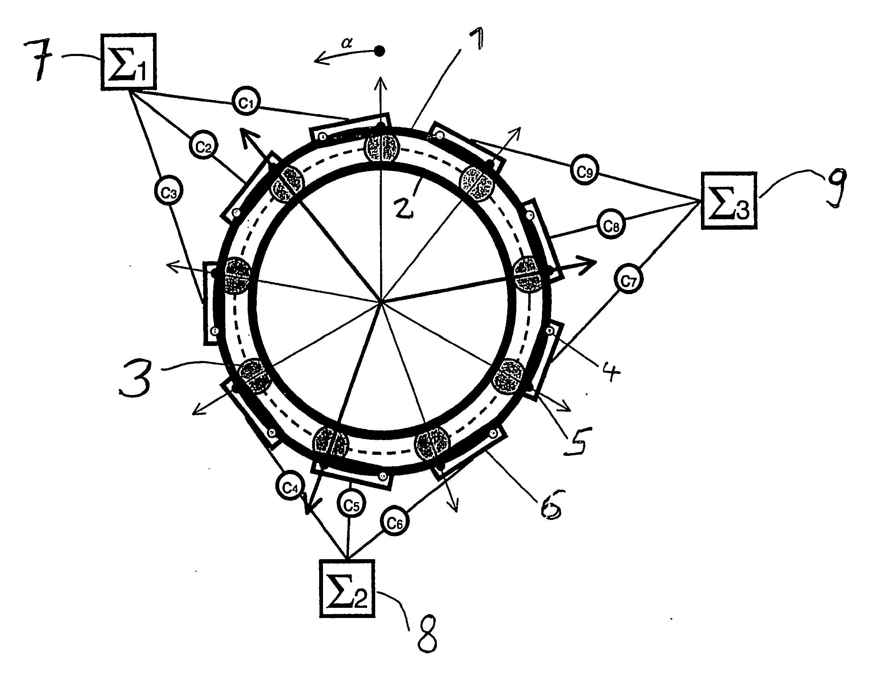

Beschreibung der Zeichnung Die Erfindung wird an einer Figur dargestellt. Die Seitenansicht zeigt schematisch ein Wälzlager bestehend aus dem Aussenring 1, dem Innenring 2 und den Wälzkörpern 3. Hier im Beispiel sind 9 Wälzkörper gezeigt. Am Aussenring 1 sind schematisch die Sensoren 4,5 angeordnet. Die Sensoren sind in einer Nut am Aussenring angeordnet. Die Sensoren 4,5 sind so angeordnet, dass der Sensorabstand dem halben Abstand zweier Wälzkörper entspricht. In dieser Darstellung ist aktuell der Sensor 5 direkt im Wälzkontakt angeordnet während der Sensor 4 genau zwischen zwei Wälzkörpern angeordnet ist. Die Sensoren 4 und 5 stellen eine DMS-Halbbrücke 6 dar, wobei zwei weitere Sensoren außerhalb der Lastzone der Wälzlager angeordnet sind, die zur Temperaturkompensation dieser zwei Sensoren 4 und 5 dienen. Ebenfalls in der Nut des Wälzlagers angeordnet ist der Bereichs-ASIC der die Ergebnisse (in der Zeichnung von drei Wälzkörpern) für einen Bereich von 120 Grad aufaddiert. Die aktuelle Winkellager in dem 120 Grad Bereich (der jeweiligen DMS-Halbbrücke) wird dem Bereichs-ASIC über die Faktoren c1, c2 und c3 für den Bereich 1 sowie c4, c5 und c6 für den Bereich 2 und c7, c8 und c9 für den Bereich 3 weiter gegeben. c1 bis c9 sind Skalare, die der Winkellage der einzelnen Sensoren in einem Bereich entsprechen. Die Bereichs-ASICs bilden nun aus den Messwerten den Bereichsvektor 7,8, 9. Diese Bereichsvektoren (Betrag und Richtung) 7,8, 9 werden über eine definierte Schnittstelle zur Auswerteeinheit übertragen.

### Bezugszeichenliste :

| | |
|---|---|
| 1 | Aussenring |
| 2 | Innenring |
| 3 | Wälzkörper |
| 4 | nicht belasteter Sensor |
| 5 | belasteter Sensor |
| 6 | Sensor bzw. DMS-Halbbrücke |
| 7,8, 9 | Bereichsvektoren |
| c1 ... c9 | aktuelle Winkellage der Sensor bzw. DMS-Halbbrücken im Bereich |

## Patentansprüche

1. Verfahren zur Ermittlung einer Gesamtbelastung eines Wälzlagers mit Sensoren (4, 5, 6) **gekennzeichnet durch** folgende Schritte:
- Unterteilung des Wälzlagers in eine vorgebbare Anzahl von Bereichen
- Zuordnung der Sensoren des Wälzlagers zu den vorgebbaren Bereichen
- Ermittlung eines Bereichsvektors für jeden dieser vorgebbaren Bereiche durch Auswertung der jeweils einem dieser vorgebbaren Bereiche zugeordneten Sensoren, wobei die Bereichsvektoren jeweils einen Betrag der Kraft und eine Richtung der Kraft in dem jeweiligen Bereich enthalten und permanent an einer Schnittstelle anstehen,
- Ermittlung der Gesamtbelastung des Wälzlagers **durch** Zusammenfassung der ermittelten Bereichsvektoren zu einem Gesamtbelastungsvektor,
wobei die Bereichsvektoren über die Schnittstelle zu einer außerhalb des Wälzlagers angeordneten Auswerteeinheit zur Ermittlung der Gesamtbelastung übermittelt werden.

2. Verfahren nach einem der vorangehenden Ansprüche, bei dem die einem Bereich zugeordneten Sensoren mittels eines auf dem Wälzlager angeordneten ASIC ausgewertet werden.

3. Verfahren nach dem Anspruch 2, bei dem der ASIC bei der Auswertung der Sensoren eine Vektoraddition durchführt.

4. Verfahren nach einem der vorangehenden Ansprüche, bei dem die Bereichs-Vektoren in der Auswerteeinheit vektoriell addiert werden und der Gesamtbelastungsvektor ermittelt wird.

5. Verfahren nach einem der vorangehenden Ansprüche, bei dem das Wälzlager in drei Bereiche unterteilt wird und drei Bereichsvektoren (7, 8, 9) gebildet werden.

6. Verfahren nach einem der vorangehenden Ansprüche, bei dem das Wälzlager in vier Bereiche unterteilt wird und vier Bereichsvektoren gebildet werden.

7. Vorrichtung zur Durchführung des Verfahrens zur Ermittlung einer Gesamtbelastung eines Wälzlagers mit Sensoren (4, 5, 6) nach einem der vorangehenden Ansprüche,
- mit einem in eine vorgegebene Anzahl von Bereichen unterteilten Wälzlager
- mit jedem dieser Bereiche zugeordneten Sensoren des Wälzlagers
- mit jedem dieser Bereiche zugeordneten ASICS zur Auswertung der jeweils diesen vorgebbaren Bereichen zugeordneten Sensoren durch Bildung eines Bereichsvektors, wobei die Bereichsvektoren jeweils einen Betrag der Kraft und eine Richtung der Kraft in dem jeweiligen Bereich enthalten,
- mit einer Schnittstelle, an der permanent die Bereichsvektoren anstehen, und
- mit einer Auswerteeinheit zur Ermittlung der Gesamtbelastung des Wälzlagers durch Zusammenfassung der ermittelten Bereichsvektoren zu dem Gesamtbelastungsvektor.

8. Vorrichtung nach dem vorangehenden Anspruch 7, bei der die ASICs auf dem Wälzlager und/oder die Auswerteeinheit außerhalb des Wälzlagers angeordnet sind bzw. ist.

## Claims

1. Method for determining a total load on a roller bearing with sensors (4, 5, 6), **characterized by** the following steps:
- subdividing the roller bearing into a predefinable number of regions,
- assigning the sensors of the roller bearing to the predefinable regions,
- determining a region vector for each of these predefinable regions by evaluating the sensors respectively assigned to one of these predefinable regions, the region vectors each containing a magnitude of the force and a direction of the force in the respective region and being permanently available at an interface,
- determining the total load on the roller bearing by combining the determined region vectors to form a total load vector,
the region vectors being transmitted, via the interface, to an evaluation unit arranged outside the roller bearing for determining the total load.

2. Method according to Claim 1, in which the sensors assigned to a region are evaluated by means of an ASIC arranged on the roller bearing.

3. Method according to Claim 2, in which the ASIC carries out a vector addition when evaluating the sensors.

4. Method according to one of the preceding claims, in which the region vectors are vectorially added in the evaluation unit and the total load vector is determined.

5. Method according to one of the preceding claims, in which the roller bearing is subdivided into three regions and three region vectors (7, 8, 9) are formed.

6. Method according to one of the preceding claims, in which the roller bearing is subdivided into four regions and four region vectors are formed.

7. Apparatus for carrying out the method for determining a total load on a roller bearing with sensors (4, 5, 6) according to one of the preceding claims,
- having a roller bearing which is subdivided into a predefinable number of regions,
- having sensors of the roller bearing which are assigned to each of these regions,
- having ASICs which are assigned to each of these regions and are intended to evaluate the sensors respectively assigned to these predefinable regions by forming a region vector, the region vectors each containing a magnitude of the force and a direction of the force in the respective region,
- having an interface at which the region vectors are permanently available, and
- having an evaluation unit for determining the total load on the roller bearing by combining the determined region vectors to form the total load vector.

8. Apparatus according to the preceding Claim 7, in which the ASICs are arranged on the roller bearing and/or the evaluation unit is arranged outside the roller bearing.

## Revendications

1. Procédé de détermination d'une sollicitation totale d'un palier à roulement muni de capteurs (4, 5, 6), **caractérisé par** les étapes suivantes :
- division du palier à roulement en un nombre pouvant être prédéfini de régions,
- association des capteurs du palier à roulement aux régions pouvant être prédéfinies,
- détermination d'un vecteur de région pour chacune de ces régions pouvant être prédéfinies par l'analyse des capteurs associés respectivement à l'une de ces régions pouvant être prédéfinies, les vecteurs de région contenant respectivement une valeur absolue de la force et un sens de la force dans la région respective et étant présents de manière permanente à une interface,
- détermination de la sollicitation totale du palier à roulement par addition des vecteurs de région déterminés pour donner un vecteur de sollicitation totale,
les vecteurs de région étant transmis au moyen de l'interface à une unité d'analyse disposée à l'extérieur du palier à roulement, pour déterminer la sollicitation totale.

2. Procédé selon la revendication 1, dans lequel les capteurs associés à une région sont analysés au moyen d'un circuit intégré à application spécifique (ASIC) disposé sur le palier à roulement.

3. Procédé selon la revendication 2, dans lequel le circuit intégré à application spécifique effectue une addition vectorielle lors de l'analyse des capteurs.

4. Procédé selon l'une quelconque des revendications précédentes, dans lequel les vecteurs de région sont additionnés de manière vectorielle dans l'unité d'analyse et le vecteur de sollicitation totale est déterminé.

5. Procédé selon l'une quelconque des revendications précédentes, dans lequel le palier à roulement est divisé en trois régions et trois vecteurs de région (7, 8, 9) sont formés.

6. Procédé selon l'une quelconque des revendications précédentes, dans lequel le palier à roulement est divisé en quatre régions et quatre vecteurs de région sont formés.

7. Dispositif pour mettre en oeuvre le procédé de détermination d'une sollicitation totale d'un palier à roulement muni de capteurs (4, 5, 6) selon l'une quelconque des revendications précédentes,
- comprenant un palier à roulement divisé en un nombre pouvant être prédéfini de régions,
- comprenant des capteurs du palier à roulement associés à chacune de ces régions,
- comprenant des circuits intégrés à application spécifique associés à chacune de ces régions pour l'analyse des capteurs associés respectivement à ces régions pouvant être prédéfinies, par formation d'un vecteur de région, les vecteurs de région contenant respectivement une valeur absolue de la force et un sens de la force dans la région respective,
- comprenant une interface à laquelle les vecteurs de région sont présents de manière permanente et
- comprenant une unité d'analyse pour déterminer la sollicitation totale du palier à roulement par addition des vecteurs de région déterminés pour donner le vecteur de sollicitation totale.

8. Dispositif selon la revendication 7 précédente, dans lequel les circuits intégrés à application spécifique sont disposés sur le palier à roulement et/ou l'unité d'analyse est disposée à l'extérieur du palier à roulement.
